# NOUVEAU FASCICULE DE BREVET EUROPEEN

(11) **EP 0 430 827 B2**
(45) Date de publication et mention de la décision concernant l'opposition: **03.03.1999**
(45) Mention de la délivrance du brevet: 03.05.1995
(21) Numéro de dépôt: 90420501.0
(22) Date de dépôt: 20.11.1990
(51) Int. Cl.: C08L 83/07, C08K 13/02, C08G 77/50

(54) **Composition organopolysiloxane à reste cyclopentenyle réticulable en un élastomère**
Zu einem Elastomeren vernetzbare Cyclopentenylgruppen enthaltende Organopolysiloxanzusammensetzung
Cyclopentenyl group-containing crosslinkable elastomeric polysiloxane composition

(30) Priorité: 21.11.1989 FR 8915528
(43) Date de publication de la demande: 05.06.1991
(73) Titulaire: RHODIA CHIMIE, 92408 Courbevoie Cédex (FR)
(72) Inventeur: Frances, Jean-Marc, F-69100 Villeurbanne (FR); Leising, Frédéric, F-69440 Mornant (FR)
(74) Mandataire: Trolliet, Maurice

(56) Documents cités:
- EP-A- 0 261 520
- EP-A- 0 282 927
- WO-A-81/01562
- US-A- 3 410 820
- US-A- 3 723 497
- US-A- 4 272 415
- "Free Radicals on Solution", J.Wiley & Sons, Inc. [1957], pp.404-411
- "Organic Peroxides", Vol. II, Ed. D. Swern, J. Wiley & Sons, Inc. [1971], pp. 102-106

## Description

La présente invention concerne une composition organopolysiloxane à reste cyclopentenyle stable en absence d'oxygène gazeux, en particulier en absence de l'oxygène de l'air et réticulable en un élastomère en présence d'oxygène gazeux provenant en particulier de l'air ambiant.

Des compositions silicones monocomposantes capables de réticuler en un élastomère par réaction de polycondensation par exposition à l'humidité de l'air sont bien connues de l'homme du métier et sont décrites dans de nombreux documents brevets.

Des compositions silicones réticulables en couche mince sous un rayonnement U.V. sont aussi bien connues et comportent des polymères de base diorganopolysiloxane porteurs généralement de fonctions époxy, (méth)acrylate et mercapto.

Plus récemment ont été décrites des compositions silicones réticulables à l'oxygène gazeux, en particulier à l'oxygène de l'air. Les polymères de base sont soit des huiles silicones à fonction mercapto (voir par exemple les brevets US-A-4 252 932 et US-A-4 268 655), ou à fonction 1,4-pentadiénylène (voir brevet US-A-4 526 954).

Par ailleurs le brevet européen EP-A-282 927 enseigne la préparation de diorganopolysiloxane à reste dicyclopentenyle par hydrosilylation partielle d'hydrogénoorganopolysiloxane, et le brevet européen EP-A-261 520 décrit des diorganopolysiloxanes à reste dicyclopentenyle dans la chaîne silicone et/ou en bout de chaîne par réaction d'hydrolyse, de cohydrolyse et/ou d'équilibration à partir d'un mélange de silane présentant des groupes hydrolysables ou condensables et des restes dicyclopentenyle.

Toutefois aucun des documents ci-dessus n'enseigne que de tels diorganopolysiloxanes à reste dicyclopentenyle sont susceptibles de réticuler à froid en présence d'oxygène gazeux, en particulier l'oxygène de l'air et en présence d'un catalyseur métallique de durcissement.

La présente invention concerne une composition organopolysiloxane stable au stockage en absence d'oxygène gazeux et réticulable en un élastomère en présence d'oxygène gazeux, caractérisée en ce qu'elle comporte :
(A) - 100 parties d'au moins un diorganopolysiloxane comportant par molécule au moins 3 restes cyclopentenyle, chacun de ces restes étant directement lié à un atome de silicium diffèrent, à l'exclusion des diorganopolysiloxanes reticulables en un élastomère par des réactions d'hydrosilylation mettant en jeu les groupes ≡SiH pouvant être compris dans leur structure,
(B) une quantité catalytiquement efficace d'un catalyseur métallique de durcissement consistant dans un sel d'acide monocarboxylique d'un métal choisi parmi le baryum, le bismuth, le calcium, le cérium, le cobalt, le chrome, le cuivre, le fer, le plomb, le magnésium, le manganèse, le nickel, les terres-rares, l'étain, le zinc et le zirconium.
(C) - 0 à 250 parties d'une charge minérale.

Le polymère (A) répond de préférence à la formule 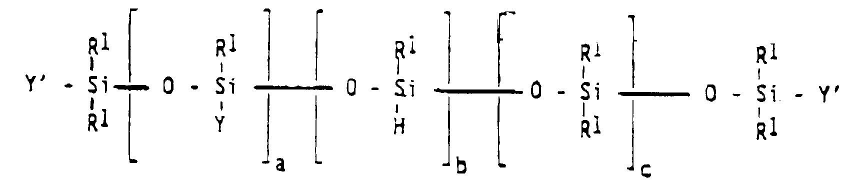 dans laquelle :
- Y représente un reste cyclopentenyle choisi parmi ceux de formule : 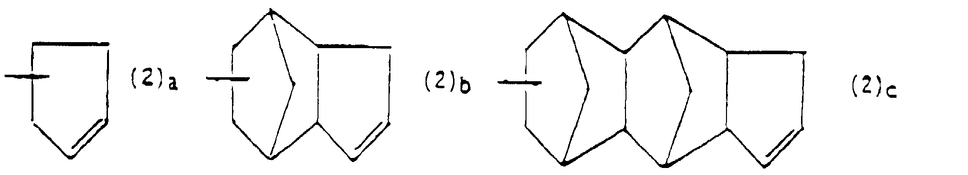
- R¹ est un radical hydrocarboné monovalent, au moins 50 % en nombre des radicaux R¹ étant méthyle et/ou phényle,
- Y' est Y ou R¹,
- a est un nombre entier compris entre 1 et 50 inclus,
- b est un nombre entier compris entre 0 et 50 inclus,
- c est un nombre entier compris entre 0 et 1 000, de préférence entre 10 et 500 sous réserve que si a = 1, Y' est Y
et si a = 2 au moins un des 2 Y'est Y.

Le polymère de formule (1) est sensiblement linéaire et ses mailles siloxanes sont réparties de façon statistique séquencée ou à bloc.

Toutefois la présence dans la chaîne de motif siloxane de formule R¹SiO_{1,5} n'est pas exclue, à une teneur en nombre d'au plus 5 %.

Les radicaux R¹ sont plus spécifiquement choisis parmi les radicaux alkyle en C₁-C₆ et phényle.

Les polymères de formule (1) préférés sont ceux qui portent le reste de formule (2)_{b} et qui se présentent sous forme d'huiles plus ou moins visqueuses et qui possèdent donc une viscosité à 25 °C inférieure à 500 000 mPa.s. La zone de viscosité préférée est située entre 1 000 et 250 000 mPa.s, étant entendu qu'un mélange de polymères (1) de viscosité différente peut être utilisé, la viscosité du mélange devant être de préférence inférieure à 500 000 mPa.s.

Il existe plusieurs procédés permettant d'obtenir le polymère de formule (1).

Selon un premier procédé on effectue l'hydrosilylation au moins partielle d'un polymère de formule : 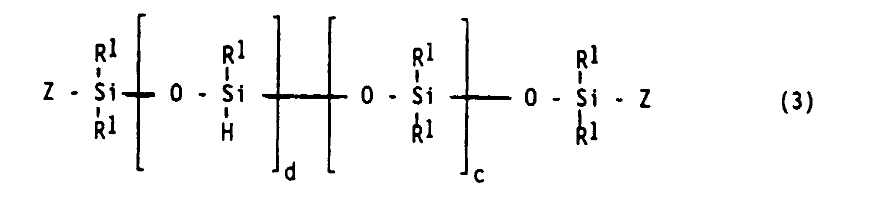 dans laquelle :
- R¹ et c ont la même signification qu'à la formule (1) ci-dessus,
- d = a + b,
- Z est R¹ ou H et si d = 1, les deux Z sont H et
si d = 2, au moins un des Z est H.

Sur le dicyclopentadiène ou ses oligomères, en particulier ceux choisis parmi ceux de formule : 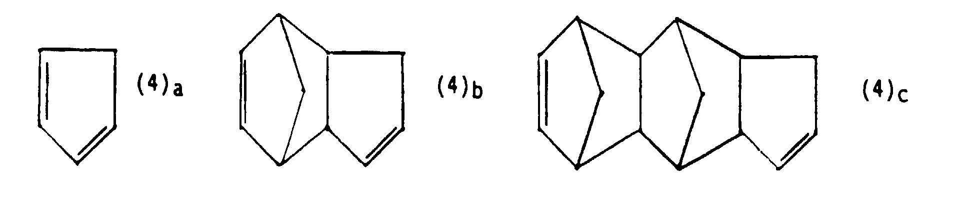 en présence d'une quantité catalytiquement efficace d'un catalyseur au platine.

Les catalyseurs au platine utilisés pour réaliser la réaction d'hydrosilylation des polymères de formule (3) sur le cyclopentadiène ou ses oligomères, de formules (4)ₐ, (4)_{b} et (4)_{c} sont amplement décrits dans la littérature, on peut en particulier citer les complexes du platine et d'un produit organique décrit dans les brevets américains US-A-3 159 601, US-A-3 159 602, US-A-3 220 972 et les brevets européens EP-A-57 459, EP-A-188 978 et EP-A-190 530 et les complexes du platine et d'organopolysiloxane vinylé, décrits dans les brevets américains US-A-3 419 593, US-A-3 715 334, US-A-3 377 432 et US-A-3 814 730.

Pour faire réagir le polymère à SiH de formule (3) sur le cyclopentadiène on utilise généralement une quantité de catalyseur au platine calculée en poids de platine métal comprise entre 5 et 600 ppm, de préférence entre 10 et 200 ppm basés sur le poids de polymère à SiH de formule (3).

La réaction d'hydrosilylation peut avoir lieu en masse ou au sein d'un solvant organique volatil tel que le toluène, l'heptane, le xylène, le tétrahydrofuranne et le tétrachloroéthylène.

Il est généralement souhaitable de chauffer le mélange réactionnel à une température de 60 à 120 °C pendant le temps nécessaire pour que la réaction soit complète. Par ailleurs il est souhaitable d'ajouter goutte à goutte le polymère à SiH sur le cyclopentadiène en solution dans un solvant organique.

On vérifie le degré d'avancement de la réaction en dosant les SiH résiduels par la potasse alcoolique puis on élimine le solvant par exemple par distillation sous pression réduite.

L'huile brute de formule (1) peut être purifiée, par exemple par passage sur une colonne absorbante de silice.

Un autre procédé de préparation des polymères de formule (1) dans le cas où b = 0 consiste à réaliser l'homo- ou la co-condensation, suivie éventuellement d'une étape d'équilibration d'un mélange de silanes comportant au moins un silane de formule : 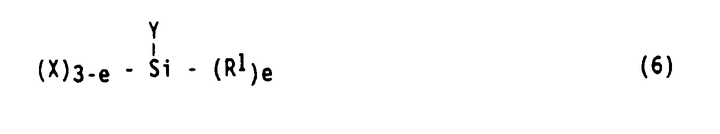 dans laquelle Y et R¹ ont la signification donnée à la formule (1), e est 1 ou 0 et X représente un groupe hydrolysable tel qu'un atome de chlore ou un groupe alcoxy en C₁-C₄.

Un tel procédé est décrit en détails dans le brevet européen EP-A-261 520 cité comme référence.

Comme catalyseur (B) de durcissement on peut utiliser en particulier les sels d'acide monocarboxylique de métaux tels que le baryum, le bismuth, le calcium, le cérium, le cobalt, le chrome, le cuivre, le fer, le plomb, le magnésium, le manganèse, le nickel, les terres rares, l'étain, le zinc et le zirconium. D'autres ligands organiques peuvent être liés aux métaux tels que les ligands chélatés (acétylacétonate) et carbonyle. Les catalyseurs recommandés sont les sels d'acides monocarboxyliques de cobalt, de fer, de plomb et de bismuth et plus particulièrement l'éthyl-2 hexanoate de cobalt.

Par quantité catalytiquement efficace de catalyseur (B) on entend une quantité suffisante pour assurer une réticulation convenable. Des quantités de 0,01 à 5 parties, de préférence de 0,1 à 3 parties en poids de sel métallique pour 100 parties en poids de polymère (A), conviennent généralement bien.

La composition peut comporter en outre un agent séchant choisi par exemple parmi les oxydes de métaux alcalins et alcalino-terreux.

On recommande d'ajouter 0,1 à 5 parties d'agents séchants pour 100 parties d'huile (A).

On recommande également d'ajouter, en vue de diminuer le temps de prise, un agent redox du type oxyde de fer, sulfate de cuivre, etc .... par exemple à la dose de 0,1 à 3 parties pour 100 parties d'huile (A).

Les charges minérales (C) sont utilisées à raison de 0 à 250 parties, de préférence 20 à 200 parties, pour 100 parties de polymère (A).

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 m²/g.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre ; leur surface spécifique est généralement inférieure à 30 m²/g.

Ces charges (C) peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysiloxanes (brevets français FR-A-1 126 884, FR-A-1 136 885, FR-A-1 236 505 ; brevet anglais GB-A-1 0247 234). Les charges traitées renferment, dans la plupart des cas, de 3 à 30 % de leur poids de composés organosiliciques.

Les charges (C) peuvent être constituées d'un mélange de plusieurs types de charges de granulométrie différente; ainsi par exemple, elles peuvent être constituées de 5 à 95 % de silices finement divisées de surface spécifique BET supérieure à 40 m²/g et de 95 à 5 % de silices plus grossièrement divisées, de surface spécifique inférieure à 30 m²/g ou de carbonate de calcium traité ou non traité.

Selon une variante avantageuse, on incorpore en outre à la composition élastomère (D) une huile diorganopolysiloxane de formule : 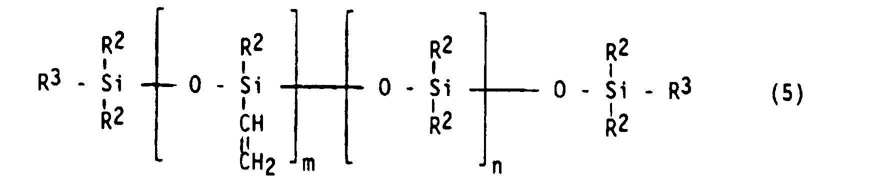 dans laquelle :
- R² a la même signification que R¹ à la formule (1), de préférence R¹ est méthyle et/ou phényle,
- R³ est R² ou vinyle,
- m est un nombre entier compris entre 0 et 100 inclus et si m = 0, R³ est vinyle,
- m et n sont choisis de telle sorte que le polymère de formule (5) présente une viscosité à 25 °C inférieure à 500 000 mPa.s, de préférence comprise entre 100 et 20 000 mPa.s.

De préférence on ajoute de 1 à 30 parties d'huile de formule (5) pour 100 parties d'huile (A).

Les compositions selon l'invention peuvent contenir en outre les adjuvants ou additifs usuels, utilisés habituellement dans les compositions élastomères silicones, bien connues de l'homme de métier.

Parmi ces adjuvants on peut en particulier citer les plastifiants qui peuvent être des huiles silicones ou des plastifiants organiques. Les plastifiants décrits dans le brevet américain US-A-4 525 565 sont en particulier utilisables.

Parmi les autres adjuvants ou additifs on peut en particulier citer les pigments de colorations, les agents d'adhérence, les stabilisants thermiques, les antioxydants, les agents de fluidisation, les agents thixotropants, les antioxydants, les stabilisants thermiques et les parfums.

Pour fabriquer les compositions conformes à l'invention, il est nécessaire d'utiliser un appareillage qui permette de mélanger intimement à l'abri de l'oxygène gazeux avec ou sans apport de chaleur, les divers constituants fondamentaux auxquels sont éventuellement ajoutés les adjuvants et additifs précités.

Un procédé plus particulièrement recommandé est celui qui consiste à introduire dans un mélangeur, sous chauffage éventuel à une température de 50-150 °C, à l'abri de l'oxygène de l'air les ingrédients dans l'ordre suivant : l'huile (A), éventuellement l'huile (D), éventuellement le plastifiant, le catalyseur (B), puis éventuellement l'agent séchant et enfin la charge (C).

On effectue ensuite de préférence un dégazage sous une pression réduite comprise par exemple entre 0,01 et 10 KPa.

Les compositions selon l'invention sont stables au stockage, en absence d'oxygène gazeux, pendant au moins 6 mois et même un an, et sont plus particulièrement utilisables pour le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

Les compositions selon l'invention peuvent être éventuellement utilisées après dilution dans des composés organiques liquides, les diluants sont de préférence des produits usuels commercialisés, choisis parmi :
- les hydrocarbures aliphatiques, cycloaliphatiques, aromatiques, halogénés ou non, tels que le cyclohexane et le toluène,
- les cétones aliphatiques et cycloaliphatiques, telle que la méthyléthylcétone,
- les esters tel que l'acétate d'éthyle.

La quantité de diluant demeure en général peu importante, elle est en général inférieure à 50 % en poids par rapport au poids total de la composition.

Les dilutions précitées de ces compositions dans des diluants organiques sont plus spécialement utilisables pour l'imprégnation en couches minces d'articles tissés ou non-tissés, l'enduction de feuilles en métal ou en matière plastique ou cellulosique ; toutefois elles peuvent être projetées, par exemple par pulvérisation à l'aide d'un pistolet à peintures, sur n'importe quels substrats, pour lesquels il est nécessaire d'obtenir un revêtement d'épaisseur de l'ordre de 5 à 300 µm. Après la projection des dilutions, les diluants s'évaporent et les compositions libérées durcissent en un film caoutchouteux parfaitement uniforme.

Par ailleurs, ce film d'élastomère peut servir comme revêtement antiadhérent inerte, non toxique, de divers substrats en contact avec des produits alimentaires tels que (1) des papiers d'emballage pour confiserie, ou viandes congelées, (2) des bacs métalliques utilisables pour la préparation de glaces et sorbets et (3) des filets métalliques dans lesquels on dépose et moule la pâte à pain et que l'on introduit avec leur contenu dans les fours pour la cuisson du pain. Il peut être employé également, comme revêtement antiadhérent et non toxique de matériaux en contact avec le corps humain tels que compresses, pansements spéciaux pour brûlures.

Dans ce qui suit ou ce qui précède, sauf mentions expresses contraires, les parties et pourcentages sont en poids.

Les exemples suivants illustrent l'invention.

Dans les formules de ces exemples Me symbolise un radical méthyle et Y un groupe dicyclopentenyle de formule (2)_{b}.

Les propriétés mécaniques des compositions élastomères conservées dans un tube en aluminium étanche à l'oxygène de l'air sont évaluées de la façon suivante :

On étale le contenu d'un tube sous forme d'une couche de 2 mm d'épaisseur, à l'air libre, sur une plaque en polyéthylène.

On mesure le temps (tp) de formation de peau, appelé également le temps pour l'obtention d'un toucher non collant et le temps de démoulage (td) nécessaire pour pouvoir retirer l'élastomère de la plaque.

La couche déposée se transforme en un film caoutchouteux ; on enlève le film d'élastomère dès qu'il est démoulable et mesure, après vieillissement de x jours à la température ambiante, les propriétés dynamométriques des élastomères, à savoir :

| | |
|---|---|
| - la dureté SHORE A (DSA) selon la norme NF-T-51 109 | après vieillissement de x jours |
| - la résistance à la rupture (R/R) en MPa selon la norme NF-T-46 002 | |
| - l'allongement à la rupture (A/R) en % selon la norme NF-T-46 002 | |
| - le module (M.Y.) en MPa pour un allongement de 100 % | |

### - EXEMPLE 1 - Préparation d'une huile greffée dicyclopentadiène :

Dans un réacteur en verre (tricol) de capacité 500 cc, muni d'un condenseur, d'une pale d'agitation centrale reliée à un moteur, d'une sonde de température, on introduit 43,4 g de dicyclopentadiène fraîchement distillé soit 0,328 mole et 0,596 g d'une solution à 3,2 % de platine (0,000098 at. g de Pt) dans l'éthyl-2 hexanol d'un catalyseur tel que décrit dans le brevet américain US 3 220 972 du 30 novembre 1965.

On porte le mélange à 70 °C pendant 20 minutes. On introduit alors à l'aide d'une ampoule de coulée 191 g d'une huile polyméthylhydrogéno-diméthylsiloxane α,ω-diméthylhydrogéno comportant 0,17 % massique d'atome d'hydrogène de formule moyenne :

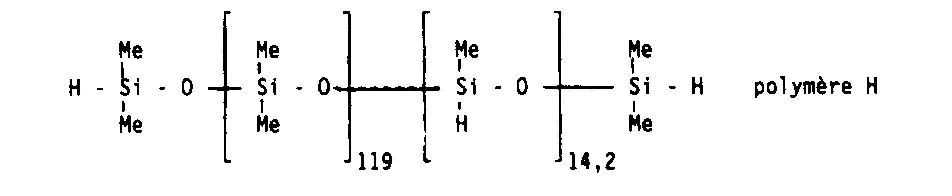

La durée d'introduction de l'huile est de 150 minutes pendant lesquelles on observe une élévation de température de 2 °C. On porte ensuite le mélange à 110 °C et on maintient cette température pendant 240 minutes.

On arrête alors le chauffage et on laisse revenir à température ambiante.

On prélève alors 232 g d'huile qui est ensuite analysée.

Le dosage des motifs hydrogéno indique qu'il ne reste plus d'hydrogène lié à du silicium, l'analyse infra-rouge confirme cette observation.

On complète cette analyse par une étude spectroscopique R.M.N. ²⁹ Si et ¹³C qui montre qu'une seule des doubles liaisons du dicyclopentadiène est hydrosilylée.

On obtient une huile (A) de formule moyenne :

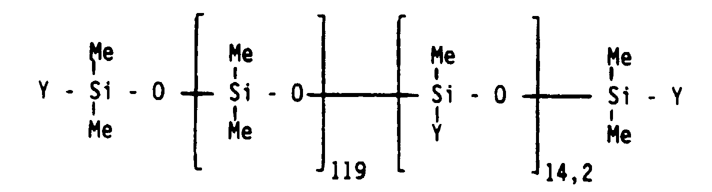

### - EXEMPLE 2 - Réticulation à l'oxygène de l'air :

Une composition type est mise en oeuvre en mélangeant sous azote :
100 parties de l'huile (A) obtenue à l'exemple 1,
35 parties de silice de précipitation,
4,8 parties de silice de combustion, de surface spécifique 300 m²/g,
0,6 partie d'octoate de cobalt à 6 % de cobalt.

On laisse réticuler la composition à l'oxygène de l'air et on obtient les propriétés suivantes :

| | |
|---|---|
| tp | 2 heures |
| td | 24 heures |
| (DSA) - 3 jours | 30 |
| (R/R) - 3 jours | 3MPa |
| (A/R) - 3 jours | 20 % |

### - EXEMPLE 3 - Préparation d'une huile (B) greffée dicyclopentadiène :

Dans un réacteur en verre (tricol) de capacité 1 litre, équipé de la même façon que le réacteur en verre utilisé dans l'exemple 1.

On introduit 130,1 g de dicyclopentadiène fraîchement distillé, soit 0,984 mole, puis 40 g d'une solution à 0,088 % Pt dans le cyclohexane, tel que décrit par le brevet américain US 3 220 972.

On porte le mélange à 102 °C pendant 20 minutes. On introduit alors à l'aide d'une ampoule de coulée 580 g de l'huile H polyméthylhydrogéno, diméthylsiloxane α,ω-dihydrogéno identique à celle décrite à l'exemple 1. La durée de l'introduction de l'huile hydrogénée est de 150 minutes.

On maintient le mélange pendant 60 minutes à 100 °C.

Le taux de transformation des motifs = SiH est de 30 %.

On élève alors la température à 140 °C pendant encore 180 minutes.

Le taux de transformation des motifs = SiH est de 37 %.

On arrête alors le chauffage et on laisse revenir à température ambiante.

Le mélange réactionnel est ensuite évaporé à 110 °C pendant 120 minutes sous 0,133 KPa. On recueille 614 g de polymère (B).

Le % d'hydrogène résiduel provenant des = SiH n'ayant pas réagi est de 0,096 %.

L'analyse spectroscopique confirme l'obtention d'une huile B) de formule moyenne :

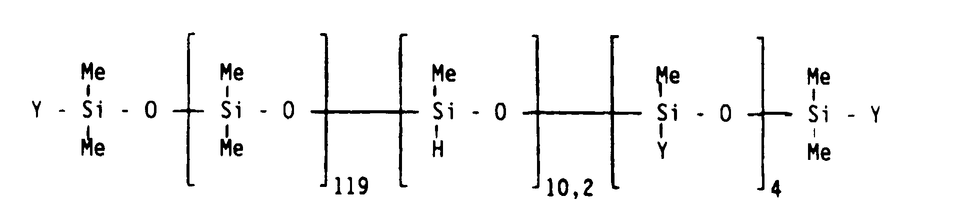

### - EXEMPLE 4 - Préparation d'une huile greffée C dicyclopentadiène :

On opère selon un protocole identique à l'exemple 3.

On introduit 120 g de dicyclopentadiène puis 0,7 g d'une solution à 3,2 % de platine dans l'éthyl-2 hexanol tel que décrit dans le brevet américain US 3 220 972.

On coule ensuite sur le mélange réactionnel porté à 83 °C 519 g du polymère H utilisé à l'exemple 1 en 150 minutes. Pendant la coulée on rajoute successivement 0,2, 0,26, 0,34 et 0,3 g de solution de platine à 3,2 % de platine après 26, 80, 100 et 150 minutes de réaction.

En fin de coulée, on dose le % d'hydrogène résiduel, soit 0,066.

On élève alors la température à 110 °C pendant 240 minutes.

Le mélange réactionnel est ensuite évaporé à 90 °C pendant 120 minutes sous 0,133 KPa. On recueille 574 grammes de polymère à partir de 628 g.

Le % H résiduel est : 0,062.

On obtient l'huile C de formule moyenne :

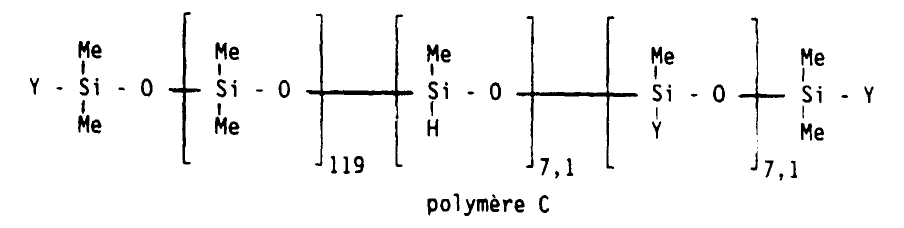

### - EXEMPLE 5 - Préparation d'une huile greffée dicyclopentadiène en mélange avec une huile polydiméthylsiloxane α,ω-divinylée :

Dans un réacteur de 1 litre équipé comme à l'exemple 1, on introduit 1,01 mole de dicyclopentadiène rectifié, 0,85 g de solution de platine tel que décrit dans le brevet américain US 3 220 972 à 3,2 % de platine. On porte le mélange réactionnel à 80 °C puis on coule 590 g d'huile H utilisée à l'exemple 1 en 200 minutes.

En fin de coulée on maintient le mélange 60 minutes à 85 °C, puis 90 minutes à 140 °C.

Le % H résiduel est : 0,054.

On rajoute alors à 85 °C, 177 g d'un polymère de formule moyenne : 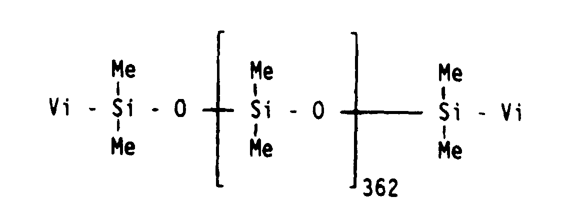 et de viscosité 3 500 mPa.s

On maintient la température de 85 °C et l'agitation pendant 60 minutes.

Le % H résiduel est 0,044.

Le mélange réactionnel est ensuite évaporé à 90 °C pendant 120 minutes sous 0,133 KPa. A partir de 863 g de mélange on recueille 805 g de mélange de polymère E dévolatilisé.

### - EXEMPLES 6 A 9 :

Différentes compositions sont élaborées en mélangeant sous azote les huiles synthétisées dans les exemples précédents avec de la silice et un catalyseur de réticulation.

L'ensemble des propriétés mécaniques obtenues sur des films de 2 mm d'épaisseur réticulant à l'oxygène de l'air ainsi que la composition des mélanges réalisés sont rassemblées dans le tableau I ci-après.

**TABLEAU I**

| Référence | Ex. 6 | Ex. 7 | Ex. 8 | Ex. 9 |
|---|---|---|---|---|
| Huile | B | E | E | C |
| Parties d'huile | 200 | 200 | 600 | 200 |
| Parties de silice de précipitation | 300 | 200 | 400 | 300 |
| Parties d'octoate à 6 % | 3 | 2,4 | 6 | 2 |
| tp (minutes) | 480 | 300 | 300 | 200 |
| td (heures) | 80 | 60 | 72 | 48 |
| (DSA) à 4 jours | 16 | 18 | 17 | 10 |
| (R/R) à 7 jours (MPa) | 3 | 2,49 | 2,6 | 0,6 |
| (A/R) à 7 jours | 45 | 59 | 68 | 100 |
| (MY) à 7 jours (MPa) | - | 7,3 | 5 | - |

### - EXEMPLE 10 :

Dans un réacteur en verre de capacité 3 litres à agitation centrale, on charge 109 g de dicyclopentadiène distillé et 188 mg d'une solution de platine à 8,7 % dans l'hexane où le complexe du platine est tel que décrit à l'exemple 3 du brevet américain US 3 814 730.

On porte la masse réactionnelle sous azote et agitation à 60 °C, puis on démarre l'introduction d'une huile polyméthylhydrogénosiloxane de formule moyenne :

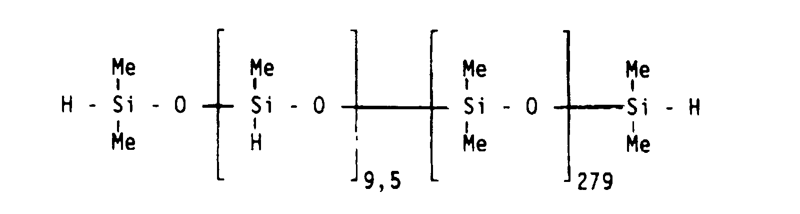

On coule 1 526 g de cette huile en 190 minutes, à 60 °C sous azote.

On laisse ensuite à 60 °C pendant 12 heures.

Le taux de transformation des fonctions = SiH est de 91 %.

On élimine le dicyclopentadiène résiduel sous pression réduite de 0,133 KPa à 70 °C pendant 4 heures.

On obtient une huile F de formule moyenne :

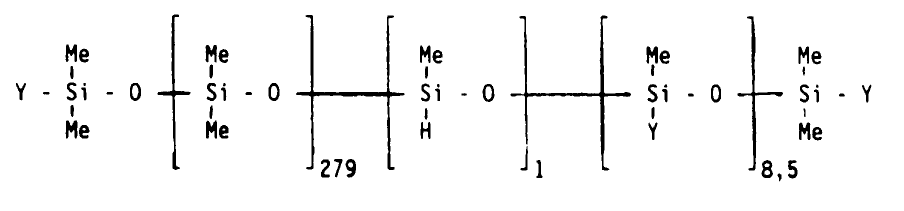

Une composition élastomère est réalisée à l'abri de l'air par mélange dans un réacteur en verre de 3 litres de :
1 000 parties de F
100 parties de silice de combustion (Aérosil® 150)
10 parties d'octoate de cobalt à 6 %.

Les caractéristiques de l'élastomère formé sont les suivantes :

| | |
|---|---|
| tp | 24 heures |
| td | 72 heures |
| (DSA) - 7 jours | 41 |
| (R/R) - 7 jours | 1MPa |
| (A/R) - 7 jours | 90 % |
| (MY) - 7 jours | 1,4 MPa. |

## Revendications

1. Composition organopolysiloxane stable au stockage en absence d'oxygène gazeux et réticulable en un élastomère en présence d'oxygène gazeux, caractérisée en ce qu'elle comporte :
**(A)** - 100 parties d'au moins un diorganopolysiloxane comportant par molécule au moins 3 restes cyclopentenyle, chacun de ces restes étant directement lié à un atome de silicium différent, à l'exclusion des diorganopolysiloxanes réticulables en élastomère par des réactions d'hydrosilylation mettant en jeu les groupes SiH pouvant être compris au sein de leur structure;
**(B)** une quantité catalytiquement efficace d'un catalyseur métallique de durcissement consistant dans un sel d'acide monocarboxylique d'un métal choisi parmi le baryum, le bismuth, le calcium, le cérium, le cobalt, le chrome, le cuivre, le fer, le plomb, le magnésium, le manganèse, le nickel, les terres-rares, l'étain, le zinc et le zirconium,
**(C)** - 0 à 250 parties d'une charge minérale,

2. Composition selon la revendication 1, caractérisée en ce que le polymère (A) répond à la formule : 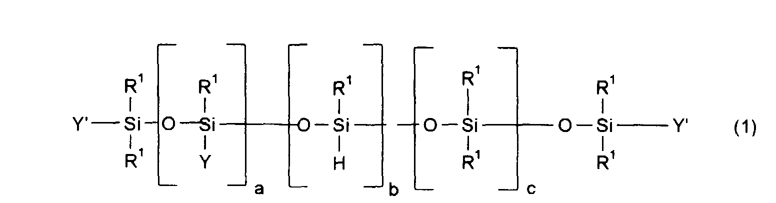 dans laquelle :
- Y représente un reste cyclopentenyle choisi parmi ceux de formule : 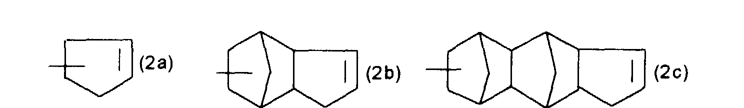
- R¹ est un radical hydrocarboné monovalent, au moins 50 % en nombre des radicaux R¹ étant méthyle et/ou phényle,
- Y' est Y ou R¹,
- a est un nombre entier compris entre 1 et 50 inclus,
- b est un nombre entier compris entre 1 et 50 inclus.
- c est un nombre entier compris entre 0 et 1 000, de préférence entre 10 et 500 sous réserve que si a = 1, Y' est Y et si a = 2 au moins un des 2 Y' est Y.

3. Composition selon la revendication 2, caractérisée en ce que le polymère (1) a une viscosité à 25°C comprise entre 1 000 et 250 000 mPa.s et R¹ est méthyle.

4. Composition selon l'une quelconque des revendications précédentes, caractérisée en ce que le catalyseur B est un sel d'acide monocarboxylique d'un métal à une teneur de 0,01 à 3 parties en poids de sel pour 100 parties d'huile (A).

5. Composition selon la revendication 4, caractérisée en ce que le catalyseur est l'éthyl-2 hexanoate de cobalt.

6. Composition selon l'une quelconque des revendications précédentes, caractérisée en ce que la composition comporte en outre une huile diorganopolysiloxane de formule : 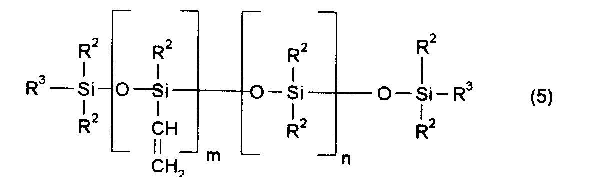 dans laquelle :
- R² a la même signification que R¹ à la formule (1), de préférence R¹ est méthyle et/ou phényle ,
- R³ est R² ou vinyle,
- m est un nombre entier compris entre 0 et 100 inclus et si m = 0, R³ est vinyle,
- m et n sont choisis de telle sorte que le polymère de formule (5) présente une viscosité à 25°C inférieure à 500 000 mPa.s.

7. Composition selon l'une quelconque des revendications précédentes, caractérisée en ce qu'elle comporte entre autre de 0,1 à 5 parties d'agents séchants choisis parmi les oxydes de métaux alcalins et alcalino-terreux pour 100 parties d'huile (A).

8. Composition selon l'une quelconque des revendications précédentes, caractérisé en ce que la composition comporte en outre de 0,1 à 3 parties d'oxyde de fer ou de sulfate de cuivre, pour 100 parties d'huile (A).

## Patentansprüche

1. Organopolysiloxan-Zusammensetzung, die in Abwesenheit von Sauerstoffgas lagerstabil und in Anwesenheit von Sauerstoffgas zu einem Elastomer aushärtbar ist, dadurch gekennzeichnet, daß sie umfaßt:
(A) - 100 Teile von mindestens einem Diorganopolysiloxan, das pro Molekül mindestens drei Cyclopentenylreste umfaßt, wobei jeder dieser Reste direkt an ein anderes Siliciumatom gebunden ist, mit Ausnahme der Diorganopolysiloxane, die durch Reaktionen der Hydrosilylierung, bei der Gruppen SiH eine Rolle spielen, die innerhalb ihrer Struktur vorhanden sein können, zu einem Elastomer aushärten;
(B) - eine katalytisch wirksame Menge eines metallischen Härtungs-Katalysators, bestehend aus einem Salz einer Monocarbonsäure mit einem unter Barium, Wismut, Calcium, Cer, Cobalt, Chrom, Kupfer, Eisen, Blei, Magnesium, Mangan, Nikkel, den seltenen Erden, Zinn, Zink und Zirkonium ausgewählten Metall,
(C) - 0 bis 250 Teile eines mineralischen Füllstoffes.

2. Zusammensetzung nach Anspruch 1, dadurch gekennzeichnet, daß das Polymer (A) der Formel (1) 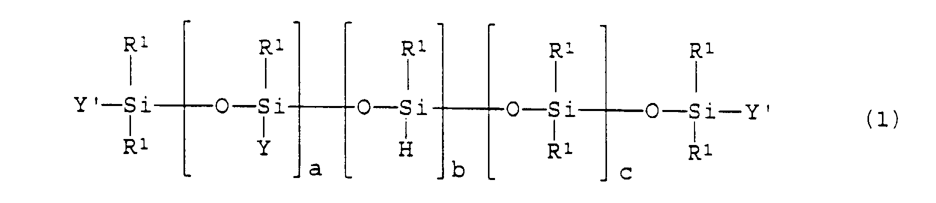 entspricht, in der
- Y einen Cyclopentenylrest darstellt, ausgewählt unter denen der Formeln (2)a, (2)b und (2)c, 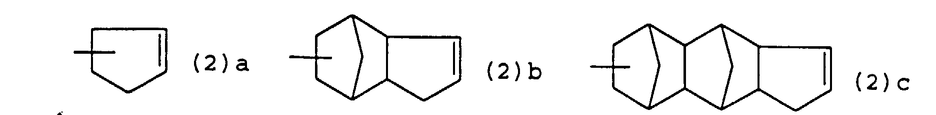
- R¹ einen monovalenten Kohlenwasserstoffrest bedeutet, wobei zahlenmäßig mindestens 50 % der Reste R¹ Methyl und/oder Phenyl sind,
- Y' gleich Y oder R¹ ist,
- a eine ganze Zahl zwischen 1 und einschließlich 50 ist,
- b eine ganze Zahl zwischen 1 und einschließlich 50 ist,
- c eine ganze Zahl zwischen 0 und 1.000, vorzugsweise zwischen 10 und 500 ist, unter der Bedingung, daß in dem Fall, wo a = 1 ist, Y' gleich Y ist, und wo a = 2 ist, mindestens eines der zwei Y' gleich Y ist.

3. Zusammensetzung nach Anspruch 2, dadurch gekennzeichnet, daß das Polymer (1) eine Viskosität bei 25 °C zwischen 1.000 und 250.000 mPa·s aufweist und daß R¹ Methyl ist.

4. Zusammensetzung nach irgendeinem der vorstehenden Ansprüche, dadurch gekennzeichnet, daß der Katalysator B ein Salz einer Monocarbonsäure mit einem Metall ist, mit einem Gehalt von 0,01 bis 3 Gewichtsteilen Salz pro 100 Teile Öl (A).

5. Zusammensetzung nach Anspruch 4, dadurch gekennzeichnet, daß der Katalysator das 2-Ethyl-Hexanoat von Cobalt ist.

6. Zusammensetzung nach irgendeinem der vorstehenden Ansprüche, dadurch gekennzeichnet, daß die Zusammensetzung außerdem ein Diorganopolysiloxan-Öl der Formel (5) 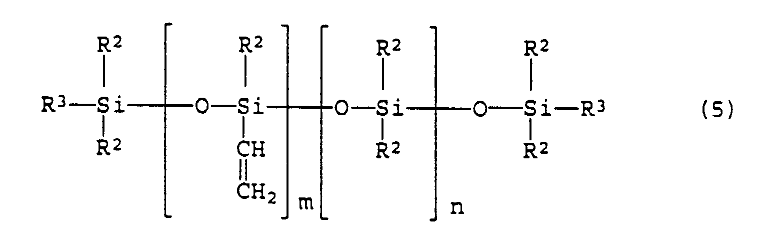 umfaßt, worin
- R² die gleiche Bedeutung wie R¹ in Formel (1) besitzt, wobei R¹ vorzugsweise Methyl und/oder Phenyl ist,
- R³ gleich R² oder Vinyl ist,
- m eine ganze Zahl zwischen 0 und einschließlich 100 bedeutet, und wenn m = 0 ist, R³ Vinyl darstellt,
- m und n in der Weise gewählt werden, daß das Polymer der Formel (5) eine Viskosität bei 25 °C von unterhalb 500.000 mPa·s aufweist.

7. Zusammensetzung nach irgendeinem der vorstehenden Ansprüche, dadurch gekennzeichnet, daß sie unter anderem 0,1 bis 5 Teile Trockenmittel, ausgewählt unter den Oxiden der Alkalimetalle und Erdalkalimetalle, pro 100 Teile Öl (A) umfaßt.

8. Zusammensetzung nach irgendeinem der vorstehenden Ansprüche, dadurch gekennzeichnet, daß die Zusammensetzung außerdem 0,1 bis 3 Teile Eisenoxid oder Kupfersulfat pro 100 Teile Öl (A) umfaßt.

## Claims

1. Organopolysiloxane composition which is stable on storage in the absence of gaseous oxygen and which can be crosslinked to an elastomer in the presence of gaseous oxygen, characterized in that it comprises:
(A) - 100 parts of at least one diorganopolysiloxane comprising at least 3 cyclopentenyl residues per molecule, each of these residues being directly bonded to a different silicon atom, with the exception of the diorganopolysiloxanes which can be crosslinked to an elastomer by hydrosilylation reactions involving the SiH groups which may be included within their structure;
(B) a catalytically effective amount of a metal curing catalyst comprising a monocarboxylic acid salt of a metal chosen from barium, bismuth, calcium, cerium, cobalt, chromium, copper, iron, lead, magnesium, manganese, nickel, the rare-earth metals, tin, zinc and zirconium,
(C) - 0 to 250 parts of an inorganic filler.

2. Composition according to claim 1, characterized in that the polymer (A) corresponds to the formula: 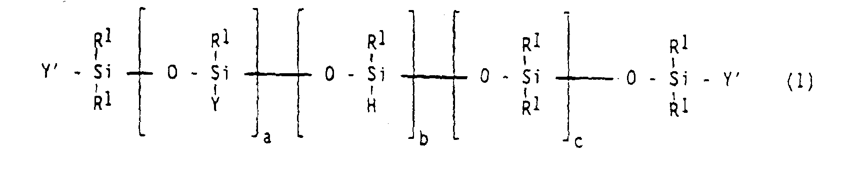 in which:
- Y represents a cyclopentenyl residue chosen from those of formula: 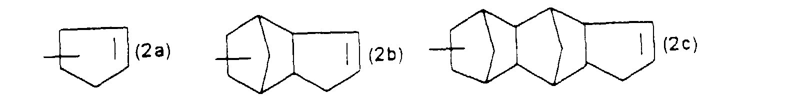
- R¹ is a monovalent hydrocarbon-comprising radical, at least 50 % by number of the R¹ radicals being methyl and/or phenyl,
- Y' is Y or R¹,
- a is an integer between 1 and 50 inclusive,
- is an integer between 0 and 50 inclusive,
- c is an integer between 0 and 1000, preferably between 10 and 500, with the proviso that if a = 1, Y' is Y and if a = 2, at least one of the 2 Y' groups is Y.

3. Composition according to claim 2, characterized in that the polymer (1) has a viscosity at 25°C of between 1000 and 250,000 mPa·s and R¹ is methyl.

4. Composition according to any one of the preceding claims, characterized in that the catalyst B is a monocarboxylic acid salt of a metal, with a content of 0.01 to 3 parts by weight of salt per 100 parts of oil (A).

5. Composition according to claim 4, characterized in that the catalyst is cobalt 2-ethylhexanoate.

6. Composition according to any one of the preceding claims, characterized in that the composition additionally comprises a diorganopolysiloxane oil of formula: 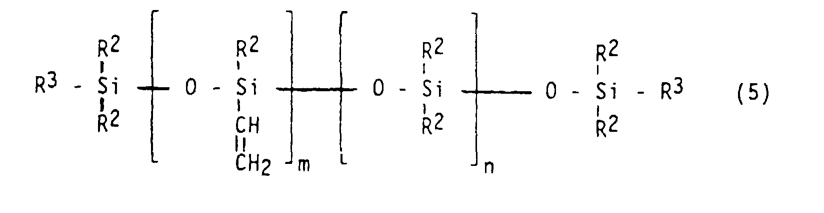 in which:
- R² has the same meaning as R¹ in the formula (1) and R¹ is preferably methyl and/or phenyl,
- R³ is R² or vinyl,
- m is an integer between 0 and 100 inclusive and, if m = 0, R³ is vinyl,
- m and n are chosen so that the polymer of formula (5) has a viscosity at 25°C which is lower than 500,000 mPa·s.

7. Composition according to any one of the preceding claims, characterized in that it comprises, inter alia, from 0.1 to 5 parts of drying agents chosen from alkali metal and alkaline-earth metal oxides per 100 parts of oil (A).

8. Composition according to any one of the preceding claims, characterized in that the composition additionally comprises from 0.1 to 3 parts of iron oxide or copper sulphate per 100 parts of oil (A).
